# EUROPÄISCHE PATENTSCHRIFT

(11) **EP 2 262 674 B1**
(45) Veröffentlichungstag und Bekanntmachung des Hinweises auf die Patenterteilung: **19.06.2013**
(21) Anmeldenummer: 08873737.4
(22) Anmeldetag: 13.11.2008
(51) Int. Cl.: B62D 6/00, B60W 40/04

(54) **VERFAHREN UND VORRICHTUNG ZUR FAHRERASSISTENZ**
METHOD AND DEVICE FOR DRIVER ASSISTANCE
PROCÉDÉ ET DISPOSITIF D'ASSISTANCE AU CONDUCTEUR

(30) Priorität: 02.04.2008 DE 102008000941
(43) Veröffentlichungstag der Anmeldung: 22.12.2010
(73) Patentinhaber: Robert Bosch GmbH, 70442 Stuttgart (DE)
(72) Erfinder: GALBAS, Roland, 71640 Ludwigsburg (DE); KNOOP, Michael, 71638 Ludwigsburg (DE); IRION, Albrecht, 70563 Stuttgart (DE); STABREY, Stephan, 70174 Stuttgart (DE); FLEHMIG, Folko, 70192 Stuttgart (DE); HAULER, Florian, 76275 Ettlingen (DE)
(86) Internationale Anmeldenummer: PCT/EP2008/065433
(87) Internationale Veröffentlichungsnummer: WO 2009/121427

(56) Entgegenhaltungen:
- EP-A- 1 236 638
- WO-A-2004/103798
- WO-A-2005/014370
- DE-A1- 19 635 009
- DE-A1- 19 926 745
- DE-A1-102006 033 458
- JP-A- 8 263 794

## Beschreibung

### Stand der Technik

Die Erfindung betrifft ein Verfahren und eine Vorrichtung zur Fahrerassistenz nach dem Oberbegriff des Anspruchs 1 bzw. des Anspruchs 9.

Aus EP 1 236 638 B1 ist ein Verfahren zum Betrieb einer Fahrzeuglenkung bekannt, bei dem die Lenkübersetzung abhängig von mindestens einem vom Fahrzustand des Fahrzeugs abhängigen veränderlichen Parameter verändert wird, wobei die Geschwindigkeit, mit der sich die Lenkübersetzung ändern kann, begrenzt wird. Dabei ist die Geschwindigkeit, mit der die Veränderung der Lenkübersetzung erfolgt, von einem Lenkradwinkel und/oder einer Lenktätigkeit abhängig.

Aus DE 19635009 A, die den Oberbegriff der Ansprüche 1 und 9 definiert, ist ein Verfahren bekannt, gemäß dem ein Hindernis im Umfeld des Fahrzeugs erfasst und ansprechend darauf eine Lenkkraft am Lenkrad eingestellt wird, sowie eine entsprechende Vorrichtung.

Gemäß WO 2004/103798 A wird ein Fahrerlenkverhalten ermittelt und die Lenkübersetzung nach Maßgabe einer Änderung des Fahrerlenkverhaltens verändert.

### Offenbarung der Erfindung

Die Erfindung macht sich hierbei die Erkenntnis zunutze, dass heute Sensorsysteme zur Verfügung stehen, die eine objektive Erfassung des Fahrzeugumfelds ermöglichen. Die von dem Sensorsystem erfasste Verkehrssituation kann mit dem Lenkverhalten des Fahrers abgeglichen werden. Auf diese Weise kann eine überzogene Lenkaktivität eines überraschten Fahrers erfasst und erforderlichenfalls korrigiert werden.

Bei dem erfindungsgemäß ausgebildeten Verfahren wird vorteilhaft eine höhere Fahrsicherheit erreicht, da eine durch Überraschung und/oder Panik des Fahrers bewirkte überzogene Lenkaktivität des Fahrers weitgehend abgemildert wird. Besonders vorteilhaft werden Grenzwerte für den Lenkwinkel und die Lenkwinkelgeschwindigkeit festgelegt. Aus einer Überschreitung dieser Grenzwerte kann dann auf eine nicht plausible Lenkaktivität des Fahrers geschlossen werden. Besonders vorteilhaft werden für den Lenkwinkel und die Lenkwinkelgeschwindigkeit zulässige Wertebereiche festgelegt. Dabei sind die zulässigen Werte von Lenkwinkel und Lenkwinkelgeschwindigkeit vorteilhaft auch von dem Abstand des Fahrzeugs von einem Hindernis abhängig. Um erfindungsgemäß einen sanften Eingriff in das Lenksystem zu ermöglichen, wird zweckmäßig die Lenkübersetzung des Lenksystems verändert. Eine hohe Lenkwinkelgeschwindigkeit kann einen weiteren Lenkwinkelzuschlag durch eine ggf. vorhandene Lenkvorhaltfunktion verursachen. Bei Erkennung eines überforderten Fahrers wird der Lenkvorhalt reduziert.

Weitere Vorteile der Erfindung ergeben sich aus der folgenden Beschreibung, den Ansprüchen und der Zeichnung.

### Kurze Beschreibung der Zeichnungen

Eine beispielhafte Ausführungsform der Erfindung wird nachfolgend unter Bezug auf die Zeichnung näher erläutert. Dabei zeigt:
- Figur 1: ein Strukturdiagramm eines Fahrerassistenzsystems eines Fahrzeugs;
- Figur 2: in einem Diagramm den Verlauf der Lenkwinkelgeschwindigkeit als Funktion des Lenkwinkels;
- Figur 3: in einem Diagramm den Lenkwinkel in Abhängigkeit der Position zu einem Hindernis;
- Figur 4: die Lenkwinkelgeschwindigkeit in Abhängigkeit der Position zu einem Hindernis;
- Figur 5: in einem Diagramm die Lenkübersetzung als Funktion der Geschwindigkeit;
- Figur 6: in einem Diagramm die Darstellung des Signalflusses von dem Fahrerlenkwinkel zu dem Radlenkwinkel bei Einbeziehung einesLenkvorhalts;
- Figur 7: in einem Diagramm die Darstellung des Lenkwinkels bzw. des Lenkvorhalts als Funktion der Zeit;
- Figur 8: eine Aufsicht auf einen Verkehrsraum;
- Figur 9: eine Aufsicht auf einen Verkehrsraum;
- Figur 10: eine Aufsicht auf einen Verkehrsraum.

### Ausführungsformen der Erfindung

Ausführungsformen der Erfindung werden im Folgenden unter Bezug auf die Zeichnung beschrieben.

Die Erfindung geht von der Erkenntnis aus, dass durch Erfassung des Fahrzeugumfelds und des Verkehrsgeschehens und Vergleich mit der Lenkaktivität des Fahrers festgestellt werden kann, ob der Fahrer angesichts der vorliegenden Verkehrssituation bestürzt oder panisch reagiert und dadurch die Fahrstabilität des Fahrzeugs durch eine überzogene Lenkaktivität auf das Spiel setzt. Wenn dies der Fall ist, kann aktiv in das Lenksystem des Fahrzeugs eingegriffen werden, um die unerwünschte Überreaktion des Fahrers weitgehend zu kompensieren. Als technische Voraussetzung für die Erkennung der Lenkaktivität des Fahrers ist zweckmäßig ein Lenkwinkelsensor vorgesehen, der sowohl den gestellten Lenkwinkel als auch die Lenkgeschwindigkeit des Fahrers liefert. Der Lenkwinkel wird zur Bestimmung der Sollgierrate des Fahrzeugs verwendet. Die Möglichkeit, in das Lenksystem des Fahrzeugs einzugreifen, wird durch eine Aktivlenkung realisiert, die zu dem von dem Fahrer gestellten Lenkwinkel einen zusätzlichen Lenkwinkel addiert oder subtrahiert.

Im Zusammenspiel einer Situationserkennung mittels einer Umfeldsensorik und einer Erkennung der Lenkaktivität des Fahrers durch eine Lenkwinkelsensorik lassen sich Extremsituationen erkennen, die charakterisiert sind durch einen von dem Verkehrsgeschehen überraschten und anschließend am Lenkrad überreagierenden Fahrer. Ein schnelles Überziehen des Lenkrads führt im ersten Moment zu einem Untersteuern des Fahrzeugs und kann den Fahrer dazu verleiten, das Lenkrad weiter zuzuziehen. Die darauf folgende verspätete starke Gierreaktion des Fahrzeugs wirkt überraschend und kann vollends zum Verlust der Kontrolle über das Fahrzeug führen. Ein durch die Umfeldsensorik plausibilisiertes mäßiges Gegenlenken durch die Aktivlenkung stellt eine Anpassung der Lenkübersetzung dar und kann ein Überziehen der Lenkung verringern. Die anschließende Gierreaktion des Fahrzeugs fällt geringer aus und fordert den Fahrer dementsprechend in geringerem Maße. Bei Vorhandensein eines Lenkvorhalts, der in der Regelungstechnik typischerweise durch ein DT1-Glied realisiert wird, werden die Parameter des DT1-Glieds derart gewählt, dass kein weiterer Lenkwinkelzuschlag erfolgen kann. Vorteilhaft ist das erfindungsgemäß vorgeschlagene Lenksystem durch eine überlegte Aktivität des Fahrers überstimmbar, das heißt, es leitet das Fahrzeug nicht zwangsweise auf eine berechnete Trajektorie, sondern passt nur das Verhalten des Lenksystems und damit die Reaktion des Fahrzeugs an ein benötigtes Ausweichmanöver an. Ein Fahrer ist dementsprechend in der Lage, zum Beispiel durch weiteres Zuziehen des Lenkrads, eine noch höhere Gierrate des Fahrzeugs zu erzwingen.

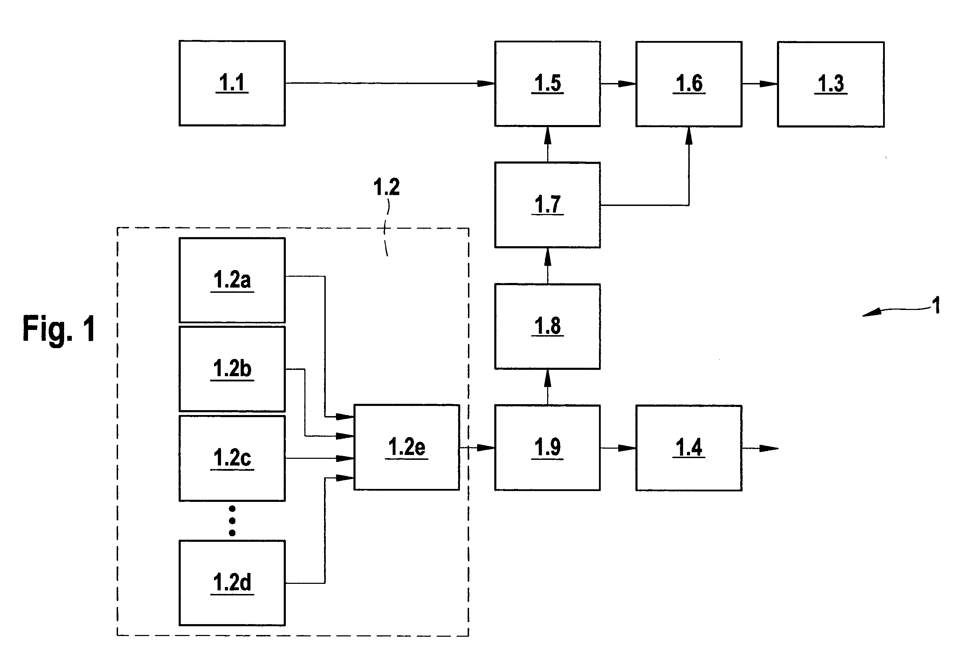

Figur 1 zeigt ein Strukturdiagramm eines erfindungsgemäß ausgebildeten Fahrerassistenzsystems 1 eines Fahrzeugs. Das System 1 umfasst mehrere nachfolgend beschriebene Funktionsmodule. Ein Funktionsmodul 1.1 repräsentiert die Lenkaktivität des Fahrers, die sich in Lenkwinkel und Lenkwinkelgeschwindigkeit äußert. Ein Funktionsmodul 1.2 repräsentiert ein Sensorsystem, das mehrere Sensoren 1.2a, 1.2b, 1.2c, 1.2d umfassen kann. Die genannten Sensoren umfassen Sensoren für die Erfassung des Fahrzeugumfelds, wie insbesondere Video-, Radar-, Ultraschall- und Lidarsensoren. Weiterhin können Sensoren für die Erfassung von Umgebungsbedingungen, wie insbesondere Temperatur und Feuchtigkeit vorgesehen sein. Vorzugsweise sind die Sensoren mit einem weiteren Funktionsmodul 1.2e verbunden, das eine Fusion der Sensordaten ermöglicht. Ein Funktionsmodul 1.3 repräsentiert die Lenkung des Fahrzeugs. Ein Funktionsmodul 1.4 ist als Interface für die Verknüpfung des Lenksystems mit weiteren Komponenten des Bordsystems des Fahrzeugs vorgesehen. Weitere Funktionsmodule ermöglichen eine Verknüpfung der Funktionsmodule 1.1 und 1.2 mit dem Funktionsmodul 1.3. Der Ausgang des Funktionsmoduls 1.2e ist mit einem Funktionsmodul 1.9 verbunden, das auf Basis der fusionierten Sensordaten eine möglichst genaue Erfassung des Fahrzeugumfelds und ggf. vorhandener Hindernisse ermöglicht. Ein mit dem Funktionsmodul 1.9 verbundenes Funktionsmodul 1.8 ermöglicht, durch Auswertung der von dem Funktionsmodul 1.9 bereit gestellten Daten eine Berechnung möglicher Ausweichmanöver, falls ein das eigene Fahrzeug gefährdendes Hindernis erfasst wird. Beispielsweise kann eine Trajektorie ermittelt werden, die einem erkannten Hindernis ausweicht und die somit ein gefahrloses Weiterfahren des Fahrzeugs ermöglicht. In dem mit dem Funktionsmodul 1.8 verbundenen Funktionsmodul 1.7 werden Lenkwinkel und Lenkwinkelgeschwindigkeit ermittelt, die erforderlich sind, um die als gefahrlos erkannte Trajektorie einzuschlagen. Diese Daten werden an ein Funktionsmodul 1.6 übermittelt, das eine Modifikation der Lenkübersetzung und des Lenkvorhalts ermöglicht. Das Funktionsmodul 1.6 ist mit der Lenkung 1.6 verbunden, so dass diese entsprechend beeinflusst werden kann. Ein weiterer Eingang des Funktionsmoduls 1.6 ist mit einem weiteren Funktionsmodul 1.5 verbunden, dass die Lenkaktivität des Fahrers (Funktionsmodul 1.1) auswertet und aus dieser Lenkaktivität ableitet, ob der Fahrer durch das Verkehrsgeschehen überfordert ist oder nicht. Im Fall einer festgestellten Überforderung des Fahrers wird über das Funktionsmodul 1.6 die Lenkung 1.3 des Fahrzeugs mit dem Ziel einer Risikoverminderung beeinflusst.

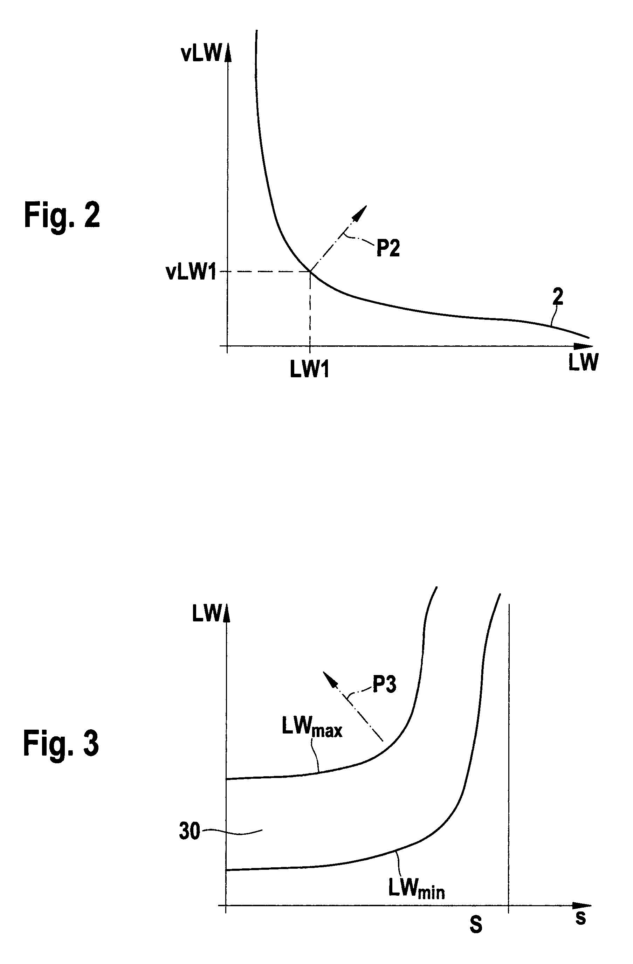

Ob eine Überforderung des Fahrers durch das Verkehrsgeschehen vorliegt, kann erfindungsgemäß durch einen Vergleich der das Fahrzeugumfeld und das Verkehrsgeschehen abbildenden Daten des Sensorsystems (Funktionsmodul 1.2) mit der Lenkaktivität des Fahrers festgestellt werden. Dazu wird zweckmäßig eine Grenze für eine plausible Lenkreaktion des Fahrers festgelegt. Ein beispielhafter Verlauf dieser Grenze ergibt sich aus dem in Figur 2 dargestellten Diagramm, das die Lenkwinkelgeschwindigkeit vLW als Funktion des Lenkwinkels LW zeigt. Die durchgezogene Kurve 2 in diesem Diagramm stellt diese Grenze dar. Zu einem bestimmten Zeitpunkt t1 einer Ausweichsituation ergibt sich durch die Lenkaktivität des Fahrers eine Kombination aus Lenkwinkel LW1 und Lenkwinkelgeschwindigkeit vLW1, die auf einen überforderten Fahrer schließen lässt. Die Grenzüberschreitung wird durch den Pfeil P2 in Figur 2 angedeutet. Der Verlauf der durch die Kurve 2 repräsentierten Grenze ist mit den durch die Umfeldsensoren gewonnenen Daten plausibilisiert.

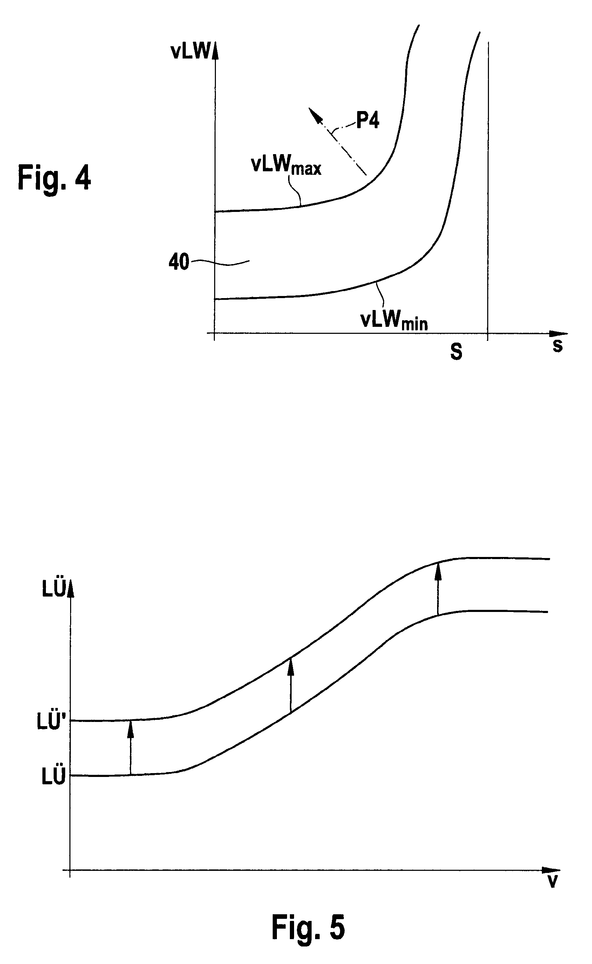

Besonders vorteilhaft werden für eine plausible Lenkaktivität des Fahrers zulässige Wertebereiche von Lenkwinkel LW und Lenkwinkelgeschwindigkeit vLW festgelegt, die zweckmäßig von der Position des Fahrzeugs in Bezug auf ein erkanntes Hindernis abhängig sind. Dies wird im Folgenden anhand der in Figur 3 und Figur 4 dargestellten Diagramme erläutert. Das in Figur 3 dargestellte Diagramm zeigt den Lenkwinkel LW als Funktion des Abstands s von einem Hindernis. Mit S_{Hindernis} ist dabei die Position eines erkannten Hindernisses bezeichnet, auf das der Fahrer durch eine Lenkaktivität reagiert. Der im Rahmen einer plausiblen Fahrerreaktion zulässige Wertebereich 30 für den Lenkwinkel LW ist durch die Werte LWmin und LWmax begrenzt.
Solange sich die Lenkaktivität des Fahrers auf diesen Wertebereich des Lenkwinkels LW beschränkt, wird die Lenkaktivität des Fahrers als noch plausibel bewertet und es erfolgt kein Eingriff in das Lenksystem gemäß der erfindungsgemäßen Lösung. Aus dem Diagramm ist weiter abzulesen, dass der noch als plausibel zugelassene Lenkwinkel von der Entfernung zwischen dem Fahrzeug und dem Hindernis abhängig ist. Wenn der Abstand s zwischen dem Fahrzeug und dem Hindernis noch relativ groß ist, werden nur vergleichsweise kleine Lenkwinkel noch als plausibel betrachtet. Mit zunehmender Annäherung an das Hindernis werden auch größere Lenkwinkel als plausibel zugelassen. Der Pfeil P3 deutet ein Überschreiten des Grenzwerts LWmax an, das einen erfindungsgemäßen Eingriff in das Lenksystem hervorruft.

Das in Figur 4 dargestellte Diagramm zeigt die Lenkwinkelgeschwindigkeit vLW als Funktion des Abstands s von einem Hindernis. Mit S_{Hindernis} ist dabei die Position eines erkannten Hindernisses bezeichnet, auf das der Fahrer durch eine Lenkaktivität reagiert. Der im Rahmen einer plausiblen Fahrerreaktion zulässige Wertebereich 40 für die Lenkwinkelgeschwindigkeit vLW ist dabei durch die Werte vLWmin und vLWmax begrenzt. Solange sich die Lenkaktivität des Fahrers auf diesen Wertebereich der Lenkwinkelgeschwindigkeit vLW beschränkt, wird die Lenkaktivität des Fahrers als noch plausibel bewertet und es erfolgt kein Eingriff in das Lenksystem gemäß der erfindungsgemäßen Lösung. Aus dem Diagramm ist weiter abzulesen, dass der noch als plausibel zugelassene Lenkwinkel von der Entfernung zwischen dem Fahrzeug und dem Hindernis abhängig ist. Wenn der Abstand s zwischen dem Fahrzeug und dem Hindernis noch relativ groß ist, werden nur vergleichsweise kleine Werte der Lenkwinkelgeschwindigkeit noch als plausibel betrachtet. Mit zunehmender Annäherung an das Hindernis werden auch größere Werte der Lenkwinkelgeschwindigkeit als plausibel zugelassen. Der Pfeil P4 deutet ein Überschreiten des Grenzwerts vLWmax an, das einen erfindungsgemäßen Eingriff in das Lenksystem auslöst.

Um einen effektiven Eingriff in das Lenksystem zu ermöglichen, wird zweckmäßig die Lenkübersetzung modifiziert. Dies wird unter Bezug auf das in Figur 5 dargestellte Diagramm erläutert, das die Lenkübersetzung LÜ als Funktion der Geschwindigkeit zeigt. Anstelle der originalen Lenkübersetzung LÜ wird eine modifizierte Lenkübersetzung LÜ' eingesetzt.

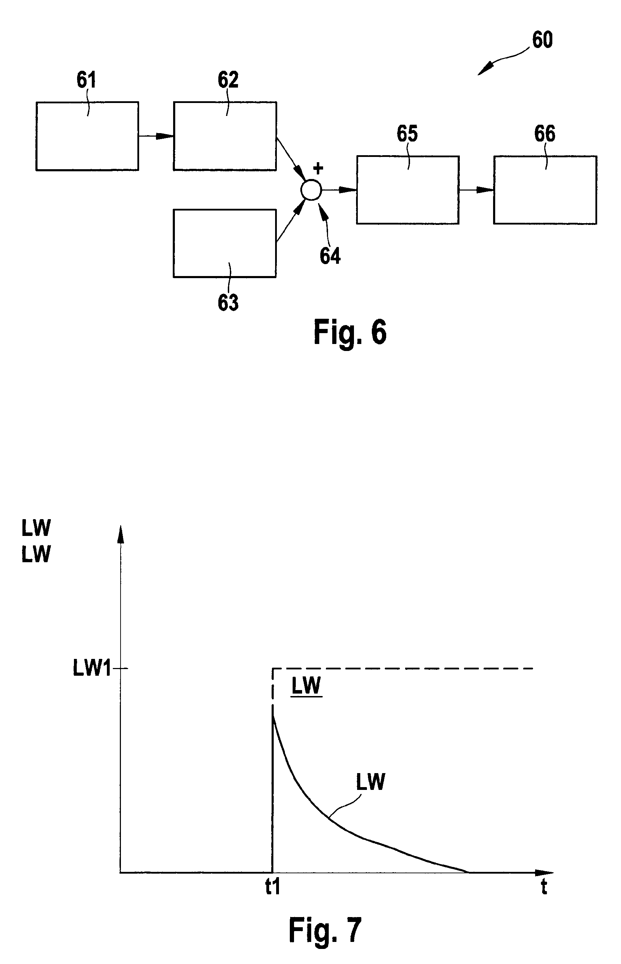

Unter Bezug auf das in Figur 6 dargestellte Diagramm 60 wird der Signalfluss von dem Lenkwinkel 61 des Fahrers zu dem Radlenkwinkel 66 verdeutlicht. Wie schon zuvor unter Bezug auf Figur 5 beschrieben, kann für einen erfindungsgemäßen Eingriff in das Lenksystem des Fahrzeugs eine variable Lenkübersetzung 62 eingesetzt werden. Bei Vorhandensein eines Lenkvorhalts 63, der typischerweise durch ein DT1-Glied realisiert werden kann, werden die Parameter des DT1-Glieds derart gewählt, dass im Falle eines erfindungsgemäßen Eingriffs kein weiterer Lenkwinkelzuschlag erfolgen kann. Über ein Summationsglied 64 und eine mechanische Lenkübersetzung 65 wird der entsprechende Radlenkwinkel 66 eingestellt.

Figur 7 zeigt in einem Diagramm den Lenkwinkel LW bzw. den Lenkvorhalt LWᵥₒᵣₕₐₗₜ als Funktion der Zeit t. Der Lenkvorhalt ist ein zusätzlich gestellter Lenkwinkel, der von der Lenkwinkelgeschwindigkeit abhängt. Er zielt darauf ab, das Lenkverhalten in Abhängigkeit von der Lenkaktivität zu adaptieren. Angenommen werde ein Sprung des Lenkwinkels LW auf den Wert LW1 zum Zeitpunkt t=t1. Aus dieser Eingangsfunktion ergibt sich der Lenkvorhalt LWᵥₒᵣₕₐₗₜ als Ausgangsfunktion.

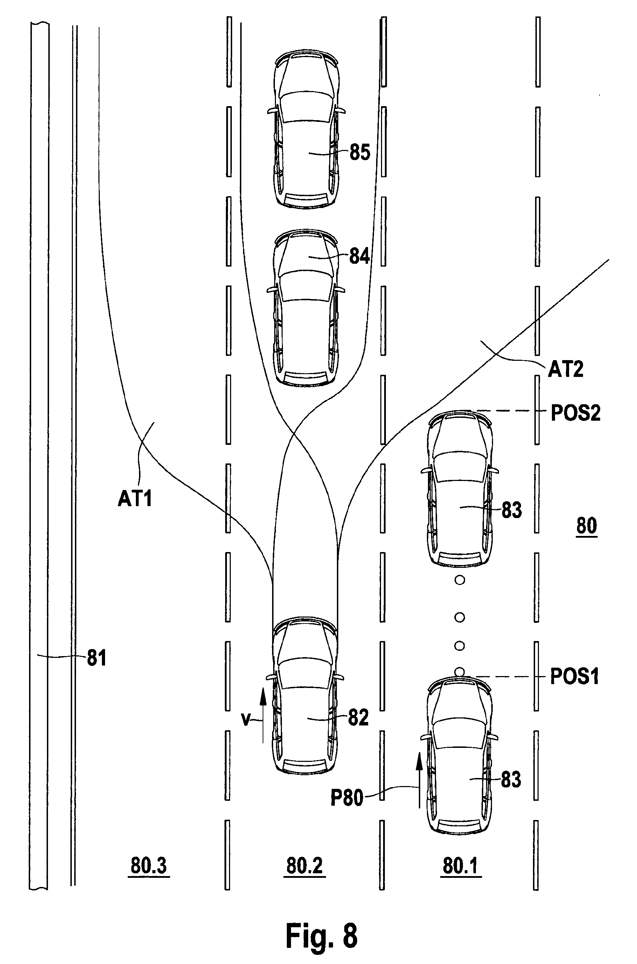

Im Folgenden werden, unter Bezug auf Figur 8, Figur 9 und Figur 10, beispielhaft einige Verkehrssituationen und der Einsatz der erfindungsgemäßen Lösung beschrieben.

Figur 8 zeigt zunächst eine Aufsicht auf einen Verkehrsraum 80 mit einer drei Fahrstreifen 80.1, 80.2, 80.3 umfassenden Richtungsfahrbahn, die links von einer Leitplanke 81 begrenzt ist. Hierbei kann es sich beispielsweise um die Richtungsfahrbahn einer Autobahn oder einer Schnellstraße handeln. Auf dem rechten Fahrstreifen 80.1 bewegt sich ein Fahrzeug 83 in Richtung des dargestellten Pfeils P80. Zu einem bestimmten Zeitpunkt nimmt das Fahrzeug 83 die Position POS1 ein. Zu einem späteren Zeitpunkt die Position POS2. Das Egofahrzeug 82 bewegt sich mit hoher Geschwindigkeit v auf dem mittleren Fahrstreifen 80.2 und nähert sich schnell einem dort vorhandenen Stau, der durch die Fahrzeuge 84, 85 angedeutet ist. Um einen Auffahrunfall zu vermeiden stehen dem Fahrer des Egofahrzeugs 82 im Wesentlichen zwei Ausweichkorridore zur Verfügung, die durch die Ausweichtrajektorien AT1 und AT2 angedeutet sind. Der Bereich der Ausweichtrajektorie AT1 wird dabei durch die Fahrphysik des Fahrzeugs 82, die Staufahrzeuge 84,85 und die Leitplanke 81 begrenzt. Der Bereich der Ausweichtrajektorie AT2 wird durch die Fahrphysik des Fahrzeugs 82, das fahrende Fahrzeug 83 und die Staufahrzeuge 84, 85 begrenzt. Das Fahrzeugumfeld wird von dem Sensorsystem 1.2 erfasst, das nach Auswertung die zwei möglichen Ausweichtrajektorien AT1, AT2 ermittelt. Es werde nun angenommen, dass der Fahrer des Fahrzeugs 82 das Stauende (Fahrzeug 84) zu spät erkennt und panikartig das Lenkrad herumreißt, um einen Aufprall auf das Fahrzeug 84 zu verhindern und auf den freien Fahrstreifen 80.1 vor das fahrende Fahrzeug 83 zu gelangen. Bei der panikartigen Reaktion des Fahrers besteht das Risiko, dass der Fahrer das Lenkrad verreißt und weiter als erforderlich zudreht. Dieses Risiko ist besonders groß, wenn aufgrund einer glatten oder rutschigen Fahrbahnoberfläche der Fahrer zunächst keine Lenkwirkung erkennt und infolgedessen den Lenkwinkel weiter vergrößert. Sobald sich dann ein griffiges Fahrbahnstück anschließt, führt dies zu einem fatalen Übersteuern des Fahrzeugs, das dann unkontrolliert nach rechts ausbrechen kann. Erfindungsgemäß wird nun die Lenkreaktion des Fahrers auf Plausibilität mit der durch Sensoren erfassten Verkehrssituation und den zur Verfügung stehenden Ausweichtrajektorien AT1, AT2 überprüft. Zu den Ausweichtrajektorien gehört eine Schar möglicher Lenkwinkel und Lenkwinkelgeschwindigkeiten. Notfalls erfolgt erfindungsgemäß ein Eingriff in das Lenksystem des Fahrzeugs 82, um den Lenkwinkel und die Lenkwinkelgeschwindigkeit derart zu begrenzen, dass die Ausweichtrajektorie AT2 sicher befahren werden kann. Eine analoge Betrachtung gilt für eine Variante, bei der der Fahrer sich entschließt, den Stau durch eine Ausweichbewegung nach links zu vermeiden.

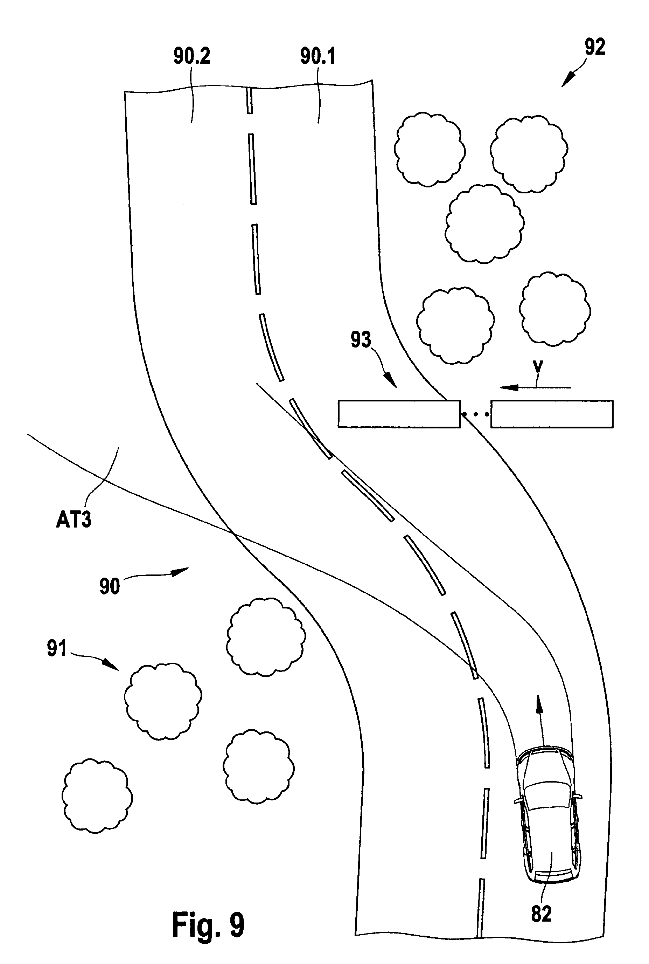

Ein weiterer Anwendungsfall wird unter Bezug auf Figur 9 verdeutlicht. Figur 9 zeigt eine Aufsicht auf einen Verkehrsraum 90. Eine kurvige Landstraße mit je einem Fahrstreifen 90.1, 90.2 für eine Fahrtrichtung führt durch ein bewaldetes Gelände mit Baumgruppen 91, 92. Mit Bezugsziffer 93 ist Hochwild bezeichnet, das, von rechts her kommend, die Fahrbahn noch vor dem herannahenden Fahrzeug 82 überqueren will. Mittels der Umfeldsensoren wird die Verkehrssituation erfasst und eine risikoarme Ausweichtrajektorie AT3 festgelegt. Eine panikartig überzogene Lenkreaktion des Fahrers wird derart kompensiert, dass das Fahrzeug sich entlang der risikoarmen Trajektorie AT3 bewegt.

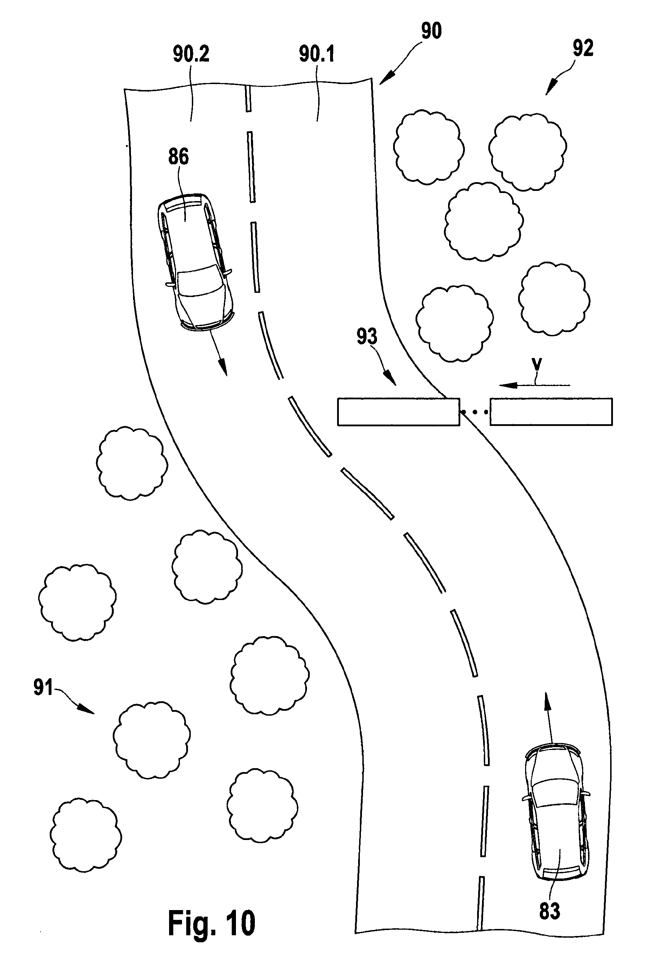

Auch Figur 10 zeigt eine Aufsicht auf den schon in Figur 9 dargestellten Verkehrsraum 90. Im Unterschied zu der in Figur 9 gezeigten Verkehrssituation zeigt Figur 10 noch ein sich im Gegenverkehr näherndes Fahrzeug 86. Bei dieser Verkehrslage ist keine risikofreie Ausweichtrajektorie möglich. Auch bei einer panikartigen Lenkreaktion des Fahrers erfolgt demzufolge kein Eingriff in das Lenksystem. Allenfalls kann eine entsprechende Warnung an den Fahrer ausgegeben werden, dass keine Ausweichtrajektorie zur Verfügung steht.

## Patentansprüche

1. Verfahren zur Fahrerassistenz, wobei das Umfeld des Fahrzeugs erfasst wird (1.2),**dadurch gekennzeichnet, dass** Grenzwerte (LWmax, LWmin, vLWₘₐₓ, vLWₘᵢₙ) für einen Lenkwinkel (LW) und eine Lenkwinkelgeschwindigkeit (vLW) festgelegt werden, dass die Lenkaktivität des Fahrers erfasst wird (1.1), dass durch Vergleich des aus dem Umfeld erfassten Verkehrsgeschehens mit der Lenkaktivität des Fahrers die Lenkaktivität des Fahrers auf Plausibilität überprüft wird, wobei aus einer Überschreitung zumindest eines der Grenzwerte auf eine nicht plausible Lenkaktivität des Fahrers geschlossen wird und dass bei der als nicht plausibel erkannten Lenkaktivität des Fahrers ein Eingriff in die Lenkung (1.3) vorgenommen wird, um ein stabiles Fahrverhalten des Fahrzeugs zu ermöglichen.

2. Verfahren nach Anspruch 1, **dadurch gekennzeichnet, dass** unter Berücksichtigung von Lenkwinkel (LW) und Lenkwinkelgeschwindigkeit (vLW) ein Grenzverlauf für eine plausible Lenkreaktion des Fahrers festgelegt wird und dass ein Eingriff in das Lenksystem (1) dann erfolgt, wenn durch die Lenkaktivität des Fahrers eine Überschreitung des Grenzverlaufs droht.

3. Verfahren nach einem der vorhergehenden Ansprüche, **dadurch gekennzeichnet, dass** ein von Grenzwerten (LWmax, LWmin) begrenzter Wertebereich (30) des Lenkwinkels (LW) festgelegt wird und dass eine plausible Lenkaktivität des Fahrers dann angenommen wird, wenn der von dem Fahrer aufgebrachte Lenkwinkel (LW) innerhalb des genannten Wertebereichs (30) liegt.

4. Verfahren nach einem der vorhergehenden Ansprüche, **dadurch gekennzeichnet, dass** ein von Grenzwerten (vLWₘₐₓ, vLWₘᵢₙ) begrenzter Wertebereich (40) der Lenkwinkelgeschwindigkeit (vLW) festgelegt wird und dass eine plausible Lenkaktivität des Fahrers dann angenommen wird, wenn die von dem Fahrer aufgebrachte Lenkwinkelgeschwindigkeit (vLW) innerhalb des genannten Wertebereichs (40) liegt.

5. Verfahren nach einem der vorhergehenden Ansprüche, **dadurch gekennzeichnet, dass** für einen Eingriff in die Lenkung (1.3) des Fahrzeugs die Lenkübersetzung (LÜ) verändert wird.

6. Verfahren nach einem der vorhergehenden Ansprüche, **dadurch gekennzeichnet, dass** die Lenkübersetzung (LÜ) bei einer als nicht plausibel erkannten Lenkaktivität des Fahrers vergrößert wird.

7. Verfahren nach einem der vorhergehenden Ansprüche, **dadurch gekennzeichnet, dass** der Lenkvorhalt (LW_{Vorhalt}) verändert wird.

8. Verfahren nach einem der vorhergehenden Ansprüche, **dadurch gekennzeichnet, dass** der Lenkvorhalt (LW_{Vorhalt}) bei einer als nicht plausibel erkannten Lenkaktivität des Fahrers verringert wird.

9. Vorrichtung zur Fahrerassistenz, umfassend ein Modul (1.2) für die Erfassung des Fahrzeugumfelds, **gekennzeichnet durch** eine Einrichtung für die Felstlegung von Grenzwerten (LWmax, LWmin, vLWₘₐₓ, vLWₘᵢₙ) für einen Lenkwinkel (LW) und eine Lenkgeschwindigkeit (vLW), eine Einrichtung (1.1) für die Erfassung der Lenkaktivität des Fahrers, eine Einrichtung (1.5) für die Plausibilitätsprüfung der Lenkaktivität des Fahrers, wobei aus einer Überschreitung zumindest eines der Grenzwerte auf eine nicht plausible Lenkaktivität des Fahrers geschlossen wird und eine Einrichtung für einen Eingriff in die Lenkung (1.3) des Fahrzeugs bei der als nicht plausiblen erkannten Lenkaktivität des Fahrers.

10. Vorrichtung nach einem der vorhergehenden Ansprüche, **gekennzeichnet durch** eine Einrichtung (1.6) für die Änderung der Lenkübersetzung (LÜ).

11. Vorrichtung nach einem der vorhergehenden Ansprüche **gekennzeichnet durch** eine Einrichtung für die Änderung des Lenkvorhalts (LW_{Vorhalt}).

## Claims

1. Method for driver assistance, wherein the surroundings of the vehicle are sensed (1.2), **characterized in that** limiting values (SAmax, SAmin, vSAₘₐₓ, vSAₘᵢₙ) for a steering angle (SA) and a steering angle speed (vSA) are defined, **in that** the steering activity of the driver is sensed (1.1), **in that** by comparing the events on the road sensed from the surroundings with the steering activity of the driver the steering activity of the driver is checked for plausibility, wherein an implausible steering activity of the driver is inferred from at least one of the limiting values being exceeded, and **in that** in the case of the steering activity of the driver which is detected as being implausible an intervention is made into the steering (1.3) in order to permit a stable driving behaviour of the vehicle.

2. Method according to Claim 1, **characterized in that** by taking into account the steering angle (SA) and the steering angle speed (vSA) a limiting profile for a plausible steering reaction of the driver is defined, and **in that** an intervention into the steering system (1) takes place when there is a risk of the limiting profile being exceeded by the steering activity of the driver.

3. Method according to one of the preceding claims, **characterized in that** a value range (30) of the steering angle (SA) which is limited by limiting values (SAmax, SAmin) is defined, and **in that** a plausible steering activity of the driver is assumed if the steering angle (SA) which is applied by the driver is within the specified value range (30).

4. Method according to one of the preceding claims, **characterized in that** a value range (40) of the steering angle speed (vSA) which is limited by limiting values (vsAₘₐₓ, vSAₘᵢₙ) is defined, and **in that** a plausible steering activity of the driver is assumed if the steering angle speed (vSA) which is applied by the driver is within the specified value range (40).

5. Method according to one of the preceding claims, **characterized in that** the steering transmission ratio (ST) is changed for an intervention into the steering (1.3) of the vehicle.

6. Method according to one of the preceding claims, **characterized in that** the steering transmission ratio (ST) is increased in the case of a steering activity of the driver which is detected as being implausible.

7. Method according to one of the preceding claims, **characterized in that** the steering lead (SA_{lead}) is changed.

8. Method according to one of the preceding claims, **characterized in that** the steering lead (SA_{lead}) is reduced in the case of a steering activity of the driver which is detected as being implausible.

9. Device for driver assistance, comprising a module (1.2) for sensing the vehicle surroundings, **characterized by** a device for defining limiting values (SAmax, SAmin, vSAₘₐₓ, vSAₘᵢₙ) for a steering angle (SA) and a steering angle speed (vSA), a device (1.1) for sensing the steering activity of the driver, a device (1.5) for checking the plausibility of the steering activity of the driver, wherein an implausible steering activity of the driver is inferred from at least one of the limiting values being exceeded, and a device for an intervention into the steering (1.3) of the vehicle in the case of the steering activity of the driver which is detected as being implausible.

10. Device according to one of the preceding claims, **characterized by** a device (1.6) for changing the steering transmission ratio (ST).

11. Device according to one of the preceding claims, **characterized by** a device for changing the steering lead (SA_{lead}).

## Revendications

1. Procédé d'assistance au conducteur, selon lequel l'environnement du véhicule est détecté (1.2), **caractérisé en ce que** des valeurs limites (LWmax, LWmin, vLWₘₐₓ, vLWₘᵢₙ) d'un angle de direction (LW) et d'une vitesse angulaire de direction (vLW) sont définies, **en ce que** l'activité de direction du conducteur est détectée (1.1), **en ce que** la plausibilité de l'activité de direction du conducteur est contrôlée en comparant le déroulement du trafic détecté dans l'environnement avec l'activité de direction du conducteur, un dépassement d'au moins l'une des valeurs limites amenant à déduire une activité de direction non plausible du conducteur, et **en ce que** dans le cas d'une activité de direction identifiée comme non plausible du conducteur, une intervention dans la direction (1.3) est effectuée afin de permettre une tenue de route stable du véhicule.

2. Procédé selon la revendication 1, **caractérisé en ce qu'**une courbe limite pour une réaction de direction plausible est définie en tenant compte de l'angle de direction (LW) et de la vitesse angulaire de direction (vLW) et **en ce qu'**une intervention dans le système de direction (1) a lieu lorsqu'il existe un risque de dépassement de la courbe limite en raison de l'activité de direction du conducteur.

3. Procédé selon l'une des revendications précédentes, **caractérisé en ce qu'**une plage de valeurs (30) de l'angle de direction (LW) délimitée par des valeurs limites (LWmax, LWmin) est définie et **en ce qu'**une activité de direction plausible du conducteur est supposée lorsque l'angle de direction (LW) appliqué par le conducteur se trouve à l'intérieur de la plage de valeur (30) mentionnée.

4. Procédé selon l'une des revendications précédentes, **caractérisé en ce qu'**une plage de valeurs (40) de la vitesse angulaire de direction (vLW) délimitée par des valeurs limites (vLWₘₐₓ, vLWₘᵢₙ) est définie et **en ce qu'**une activité de direction plausible du conducteur est supposée lorsque la vitesse angulaire de direction (vLW) appliqué par le conducteur se trouve à l'intérieur de la plage de valeur (40) mentionnée.

5. Procédé selon l'une des revendications précédentes, **caractérisé en ce que** le rapport de démultiplication de direction (LÜ) est modifié pendant une intervention dans la direction (1.3) du véhicule.

6. Procédé selon l'une des revendications précédentes, **caractérisé en ce que** le rapport de démultiplication de direction (LÜ) est augmenté en présence d'une activité de direction identifiée comme non plausible du conducteur.

7. Procédé selon l'une des revendications précédentes, **caractérisé en ce que** la réserve de direction (LWᵥₒᵣₕₐₗₜ) est modifiée.

8. Procédé selon l'une des revendications précédentes, **caractérisé en ce que** la réserve de direction (LWᵥₒᵣₕₐₗₜ) est réduite en présence d'une activité de direction identifiée comme non plausible du conducteur.

9. Équipement d'assistance au conducteur, comprenant un module (1.2) pour la détection de l'environnement du véhicule, **caractérisé par** un dispositif de définition de valeurs limites (LWmax, LWmin, vLWₘₐₓ, vLWₘᵢₙ) d'un angle de direction (LW) et d'une vitesse angulaire de direction (vLW), un dispositif (1.1) de détection de l'activité de direction du conducteur, un dispositif (1.5) de contrôle de la plausibilité de l'activité de direction du conducteur, un dépassement d'au moins l'une des valeurs limites amenant à déduire une activité de direction non plausible du conducteur, et un dispositif d'intervention dans la direction (1.3) du véhicule dans le cas d'une activité de direction identifiée comme non plausible du conducteur.

10. Équipement selon l'une des revendications précédentes, **caractérisé par** un dispositif (1.6) de modification du rapport de démultiplication de direction (LÜ).

11. Équipement selon l'une des revendications précédentes, **caractérisé par** un dispositif de modification de la réserve de direction (LWᵥₒᵣₕₐₗₜ).
